# EUROPÄISCHE PATENTSCHRIFT

(11) **EP 3 523 674 B1**
(45) Veröffentlichungstag und Bekanntmachung des Hinweises auf die Patenterteilung: **24.03.2021**
(21) Anmeldenummer: 17765094.2
(22) Anmeldetag: 22.08.2017
(51) Int. Cl.: G01S 7/48, G01S 3/784, F41G 3/14, F41G 7/22, F41H 11/02, G01S 5/16

(54) **DETEKTOREINHEIT UND EIN VERFAHREN ZUM DETEKTIEREN EINES OPTISCHEN DETEKTIONSSIGNALS**
DETECTOR UNIT AND METHOD FOR DETECTING AN OPTICAL DETECTION SIGNAL
UNITÉ DE DETECTION ET PROCÉDÉ DE DETECTION D'UN SIGNAL DE DETECTION OPTIQUE

(30) Priorität: 05.10.2016 DE 102016011913
(43) Veröffentlichungstag der Anmeldung: 14.08.2019
(73) Patentinhaber: HENSOLDT Sensors GmbH, 82024 Taufkirchen (DE)
(72) Erfinder: SCHERBARTH, Stefan, 88090 Immenstaad (DE); LAUBER, Jochen, 80939 München (DE)
(74) Vertreter: LifeTech IP Spies & Behrndt Patentanwälte PartG mbB
(86) Internationale Anmeldenummer: PCT/EP2017/071150
(87) Internationale Veröffentlichungsnummer: WO 2018/065146

(56) Entgegenhaltungen:
- EP-A1- 2 682 776
- US-A- 6 137 566
- US-A1- 2013 336 536
- US-A1- 2016 057 366

## Beschreibung

Die vorliegende Erfindung bezieht sich auf eine Detektoreinheit und ein Verfahren zum Detektieren eines optischen Detektionssignals und insbesondere auf eine Laser-Warn-Vorrichtung und einen Detektor für Mündungsfeuer.

### Hintergrund

Sowohl für die Detektion von gepulsten Laserquellen (z.B. für lasergesteuerte Lenkflugkörper) als auch für Mündungsfeuer sind sehr kurze, lokalisierte optische Blitze zu detektieren, und zwar häufig vor einem starken, mit Sonnenlicht bestrahltem Hintergrund. Die typische Blitzdauer der Lichtblitze können im Bereich von Nanosekunden für gepulsten Laser und im Bereich ab ca. hundert Mikrosekunden bei der Detektion von Mündungsfeuer liegen.

Ein primärer Begrenzungsfaktor für die Detektion solcher Signale während der Tageszeit ist das Schrotrauschen des vorhandenen solaren Hintergrunds. Typische Referenzhintergrund-Lichtsignale sind beispielsweise ein sonnenbestrahlter Strand oder eine sonnenbestrahlte Wolke (mit Albedowerten von 0,6 bis 0,8) oder sogar sonnenbestrahlte Schneefelder (mit einem Albedowert von bis zu 1).

Bisher bekannte Systeme zur Detektion von gepulsten Lasern und für feindliches Feuer sind deutlich begrenzt hinsichtlich des Hintergrundlichtes und sind für moderne Anwendungen häufig ungeeignet. Zur Beschußdetektion werden zwar ebenfalls akustische Detektoren genutzt, die liefern jedoch häufig Fehlalarme (z.B. bei Hubschrauberanwendungen). Die ebenfalls genutzten Radarsysteme sind aufwändig und müssen außerdem aktiv Signale abstrahlen, was oft nicht gewünscht ist.

In EP 2 682 776 ist ein bekanntes Verfahren zur Detektion von gepulster Laserstrahlung offenbart. US 6,137,566 offenbart ein weiteres bekanntes Verfahren und eine bekannte Vorrichtung zur Signalverarbeitung in einem Laserradarempfänger.

US 2016/057366 A1 offenbart einen Bildsensor, der sowohl passiv Bilder aufnimmt als auch Ereignisse wie Blitze detektiert.

Daher besteht ein Bedarf an Detektoren, die in der Lage sind, sehr kurze Lichtblitze von sehr geringer Intensität vor einem Hintergrundsignal hoher Intensität wie beispielsweise sonnenbeschienene Objekte mit Albedowerten von bis zu 0,8 (Wolke, Strand) oder mehr zu detektieren. Außerdem besteht ein Bedarf nach Detektoren für Laserwarnern oder nach Detektoren für Warnsysteme vor feindlichem Feuer, die eine hohe Ortsauflösung von beispielsweise ≤ 1° erreichen können.

### Zusammenfassung

Zumindest ein Teil der oben genannten Probleme wird durch eine Detektoreinheit nach Anspruch 1, eine Kamera nach Anspruch 10 und ein Verfahren nach Anspruch 14 gelöst. Die abhängigen Ansprüche beziehen sich auf vorteilhafte Weiterbildungen der Gegenstände der unabhängigen Ansprüche.

Die vorliegende Erfindung bezieht sich auf eine Detektoreinheit zum Detektieren eines Detektionssignals von einer lokalisierten optischen Quelle vor einem Hintergrund und insbesondere auf eine Detektoreinheit zum Detektieren von kurzen optischen Detektionssignalen. Die Detektoreinheit kann daher insbesondere für Laserwarner und zur Detektion von feindlichem Feuer genutzt werden und umfasst: einen Bildsensor und eine Signalverarbeitungseinheit. Der Bildsensor umfasst eine Vielzahl von Pixeln zum Erfassen des Detektionssignals und des Hintergrundes, wobei der Bildsensor ausgebildet ist, um in Abhängigkeit von dem Detektionssignal und dem Hintergrund unabhängig für jeden Pixel ein Bildsignal zu erzeugen. Die Signalverarbeitungseinheit ist ausgebildet, um für jeden Pixel das Bildsignal mit einem Schwellenwert zu vergleichen und bei Überschreiten des Schwellenwertes innerhalb einer Zeitdauer Ereignisdaten auszugeben. Optional ist die Signalverarbeitungseinheit in dem Bildsensor integriert.

Der Schwellenwertvergleich kann hierbei durch einen analogen Schwellwertkomparator pro Pixel erfolgen, sodass die Zeitdauer sich aus der Zeitkonstante dieses analogen Schwellwertkomparators ergeben kann. Hierdurch wird erreicht, dass die Detektion nicht an ein festes, durch die Zeitdauer gegebenes Zeitraster gebunden ist, sondern immer dann Ereignisdaten erzeugt werden, wenn innerhalb der durch die Zeitkonstante gegebenen Zeitdauer der Schwellwert überschritten wird. Erfindungsgemäß sind der Schwellenwert und/oder die Zeitkonstante einstellbar, wobei der Schwellwert optional für jedes Pixel individuell eingestellt werden kann. Hierdurch wird erreicht, dass die auf Grund von Fertigungstoleranzen unterschiedlichen Empfindlichkeiten der Einzelpixel kompensiert werden können. Bei geeigneter Einstellung der Schwellenwerte kann somit eine gleiche Empfindlichkeit aller Pixel erzielt werden. Die Ereignisdaten hängen von dem Detektionssignal ab (z.B. nur jene Pixel betreffen, die optische Signale von der lokalisierten Quelle erfassen).

Das (elektrische) Bildsignal kann beispielsweise einen elektrischen Spannungswert oder eine Anzahl von Ladungen darstellen (z.B. durch einen CCD-Sensor erzeugt). Es ist ebenfalls möglich, dass das Bildsignal einen Stromstärkewert anzeigt, wie er beispielsweise durch eine Fotodiode erzeugt wird. Der Hintergrund stellt ebenfalls ein optisches Signal dar, welches sich mit der Zeit oder auch in Abhängigkeit vom Ort ändern kann. In der Regel sind die Änderungen natürlichen Hintergrundlichtes in dem hier betrachteten Zeitintervall von Nanosekunden bis Microsekunden sehr gering und werden durch das aus der Photonenstatistik des Hintergrundsignals bestimmte Schrotrauschen dominiert. Um die auf einen begrenzten Bereich lokalisierte Quelle zu detektieren, umfasst die Signalverarbeitungseinheit für jeden Pixel eine zughörige Signalverarbeitungskomponente, die für den einzelnen Pixel die Auswertung vornimmt und ein potenzielles Ereignis feststellt.

Bei weiteren Ausführungsbeispielen ist die Signalverarbeitungseinheit weiter ausgebildet, um die Zeitdauer und/oder den Schwellenwert derart anzupassen, dass eine Anzahl (Rate) von ausgegebenen Ereignisdaten in einer vorbestimmten Zeiteinheit (z.B. pro Sekunde) innerhalb eines vorbestimmten Bereiches liegt. Optional kann hierdurch erreicht werden, dass die mittlere Anzahl von Ereignisdaten pro Zeiteinheit unabhängig von dem Hintergrund wird. Hierdurch wird erreicht, dass die Detektoreinheit immer mit der durch die Hintergrundstrahlung begrenzten maximalen Empfindlichkeit betrieben wird.

Die vorliegende Erfindung ist nicht auf einen bestimmten vorbestimmten Bereich eingeschränkt. Vielmehr kann der vorbestimmte Bereich frei gewählt werden und an die entsprechende Hardware angepasst werden (z.B. nur durch einen Maximalwert definiert sein). Somit wird der vorbestimmte Bereich beispielsweise derart gewählt, dass eine Optimierung der Detektion erreicht wird und nur so viele Ereignisse (z.B. von einer Quelle) detektiert werden wie auch verarbeitet werden können. Beispielhaft kann diese Rate für eine sehr einfache weitere Signalverarbeitungshardware bei ca. 10-100/s liegen; wird die bestmögliche Empfindlichkeit angestrebt kann eine leistungsfähigere Signalverarbeitungshardware verwendet werden, mit weicher dann auch Raten von 100000/s verarbeitet werden können.

Optional umfasst der Bildsensor einen CMOS-Bildsensor und die Zeitdauer ist eine Integrationszeit zum Aufsummieren des Detektionssignals.

Optional kann auch nur die Signalverarbeitung in einer CMOS Ausleseelektronik realisiert sein, auf welcher die lichtsensitiven Pixel rückseitig kontaktiert werden. Dies kann beispielsweise durch das sogenannte "flip chip bonding" geschehen, bei dem pixelspezifische Signalkomponenten der Auswerteelektronik auf der Rückseite durch den Bildsensor kontaktiert werden.

Erfindungsgemäß ist die Signalverarbeitungseinheit weiter ausgebildet, um bei Ausgabe der Ereignisdaten ein Auslesen eines Pixelwertes für den entsprechenden Pixel zu veranlassen, so dass ein ereignisgesteuertes und asynchrones Auslesen der Pixel erfolgt. Insbesondere brauchen beim Auslesen keine vollständigen Frames erzeugt werden, die Pixelwerte können stattdessen unabhängig voneinander verarbeitet werden. Ein Überschreiten eines einzigen Pixelwertes ist ausreichend, um für diesen Pixel (und nur für diesen Pixel) ein Auslesen auszulösen. Der Pixelwert umfasst beispielsweise das aufsummierte Signal, wobei das aufsummierte Signal beispielsweise durch die Gesamtzahl von Ladungen gegeben ist, die innerhalb der Zeitkonstante des Schwellenwertkomparators erzeugt wurden und die dem Bildwert für den entsprechenden Pixel entsprechen. Somit definieren Ausführungsbeispiele ebenfalls eine Signalverarbeitungseinheit, die unabhängig voneinander für jeden Pixel einzeln Ereignisdaten ausgibt.

Bei weiteren Ausführungsbeispielen umfasst die Detektoreinheit eine Warneinheit, die ausgebildet ist, um basierend auf den Ereignisdaten ein Warnsignal als Warnung vor dem Detektionssignal zu erzeugen. Die Ereignisdaten sind somit nicht notwendigerweise ein Warnsignal. Erst wenn noch andere Kriterien erfüllt sind, kann daraus beispielsweise ein Warnsignal generiert werden.

Da die Ereignisdaten auch die Identifikation des Pixels beinhalten, für welches das Ereignis ausgelöst wurde, kann die Warneinheit auch die Richtung der optischen Quelle ermitteln. Hierbei kann eine entsprechende Kalibrierung des Bildsensors genutzt werden, um jedem einzelnen Pixel eine Richtung im Zielbereich zuzuordnen und somit die Richtung zu der lokalisierten Quelle zu bestimmen.

Die Warneinheit umfasst optional einen Filter, das ausgebildet ist, um ein periodisches Signal unter Nutzung eines ersten Schwellenwertes und/oder ein nichtperiodisches Signal unter Nutzung eines zweiten Schwellenwertes zu filtern, wobei der erste Schwellenwert kleiner ist als der zweite Schwellenwert. Das Filter kann dazu beispielsweise ein digitales Filter umfassen und die Warneinheit kann eine Rückkopplung zu der Signalverarbeitungseinheit aufweisen, um eine Änderung des Schwellenwertes zu bewirken.

Optional sind die Signalverarbeitungseinheit und/oder die Warneinheit ausgebildet, um den Schwellenwert derart einzustellen, dass ein Signalrauschverhältnis bei einem Wert 13 liegt (es kann aber auch ein kleineres oder größeres Verhältnis gewählt werden).

Die Erfindung bezieht sich auch auf eine Kamera mit einer zuvor beschriebenen Detektoreinheit. Optional umfasst die Kamera eine Linse, einen Spektralfilter und/oder einen Interferenzfilter.

Die Erfindung bezieht sich auch auf ein Verfahren zum Detektieren eines Detektionssignals von einer lokalisierten optischen Quelle vor einem Hintergrund, wobei das Detektionssignal und der Hintergrund durch einen Bildsensor mit einer Vielzahl von Pixeln erfasst wird. Das Verfahren umfasst die Schritte: Erzeugen eines Bildsignals, wobei das Bildsignal unabhängig für jeden Pixel erzeugt wird, Vergleichen des Bildsignals mit einem Schwellenwert; und Ausgeben von Ereignisdaten, wenn der Schwellenwert innerhalb einer Zeitdauer überschritten wird. Das Vergleichen wird unabhängig für jeden Pixel einzeln ausgeführt und der Schwellenwert und die Zeitdauer sind einstellbar. Optional kann für jedes Pixel ein individueller Schwellenwert und/oder eine individuelle Zeitdauer eingestellt werden. Erfindungsgemäß ist die Signalverarbeitungseinheit ausgebildet, um bei der Ausgabe der Ereignisdaten ein Auslesen eines Pixelwertes für den entsprechenden Pixel zu veranlassen, wobei das Auslesen ereignisgesteuert und asynchron erfolgt.

Ausführungsbeispiele lösen zumindest einige oben genannten technischen Probleme durch eine Nutzung eines CMOS-Bildsensors, bei dem in jedem Pixel ein analoger Komparator integriert ist, der das erfasste Bildsignal mit einem Schwellenwert vergleicht und bei Überschreiten ein Ereignis auslöst. Beispielsweise zeigt dieses Ereignis ein Überschreiten einer absoluten Änderungsgeschwindigkeit der Photoelektronenanzahl an. Der Inhalt des jeweiligen Pixels kann dann asynchron, ereignisgesteuert ausgelesen werden - nicht notwendigerweise Frame-basiert.

Der Schwellenwert ist dabei regelbar und kann beispielsweise derart eingestellt werden, dass sich eine konstante (mit einer Toleranzbreite von beispielsweise +/-10%) und noch gut verarbeitbare Ereignisrate einstellt. Diese Ereignisrate kann beispielsweise in einem Bereich von 10 bis 100000 Ereignissen/Sekunde liegen. Die Erfindung soll aber nicht auf diese Werte eingeschränkt werden. Der konkrete Wert, auf dem die Ereignisrate justiert wird, kann frei gewählt werden und den jeweiligen Gegebenheiten (z.B. der Rechenleistung) angepasst werden.

Optional können auch die Ereignisdaten für jedes Pixel in der Signalverarbeitung während fester Zeitintervalle gezählt werden. Die somit erhaltene Ereignisanzahl pro Pixel wird dann jeweils am Ende der Zeitintervalle für alle Pixel ausgelesen.

Der Detektor kann gemäß weiterer Ausführungsbeispiele als eine Kamera ausgebaut sein, wobei ein entsprechend lichtstarkes Objektiv mit einem passenden Sichtbereich von beispielsweise 90°*90° sowie einer geeigneten spektralen Filterung genutzt wird.

### Kurzbeschreibung der Figuren

Die Ausführungsbeispiele der vorliegenden Erfindung werden besser verstanden mit der folgenden detaillierten Beschreibung und den beiliegenden Zeichnungen der unterschiedlichen Ausführungsbeispiele. Sie dienen der Erklärung und dem Verständnis.
- Fig. 1: zeigt einen Detektor gemäß einem Ausführungsbeispiel der vorliegenden Erfindung.
- Fig. 2: zeigt beispielhaft einen Signalverlauf für ein Signal, welches durch eines der Pixel des Bildsensors erfasst wird.
- Fig. 3: zeigt den Detektor mit weiteren optionalen Komponenten gemäß weiterer Ausführungsbeispiele.

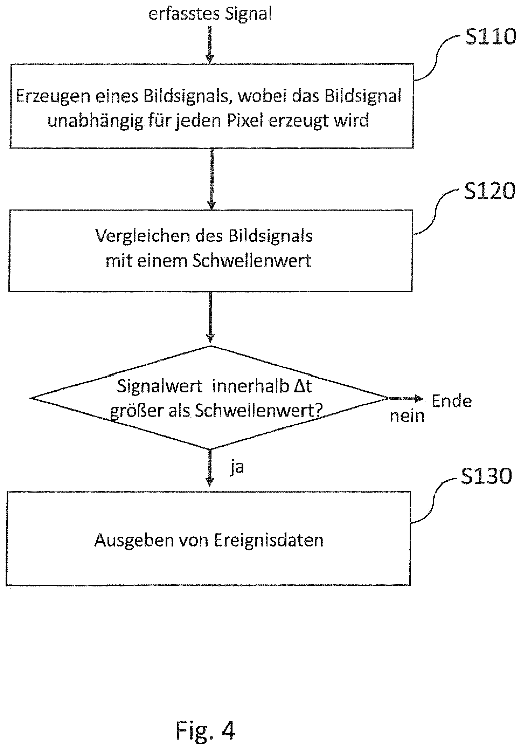

- Fig. 4: zeigt ein Flussdiagramm für ein Verfahren zum Detektieren eines Detektionssignals von einer lokalisierten optischen Quelle gemäß einem Ausführungsbeispiel der vorliegenden Erfindung.

### Detaillierte Beschreibung

Das zugrundeliegende Detektorkonzept, wie es in Ausführungsbeispielen der vorliegenden Erfindung umgesetzt wird, kann wie folgt beschrieben werden.

Für einen opto-elektronischen Detektor wird das kleinste detektierbare Signal durch das intrinsische Rauschen des Detektors sowie durch Rauschen des Hintergrundsignals begrenzt, vor welchem das Nutzsignal zu detektieren ist. Für sehr kurze Nutzsignale ändert sich das Hintergrundsignal während der Dauer des Nutzsignals in der Regel kaum, so dass das von der Hintergrundintensität erzeugte Schrotrauschen bestimmend für den Rauschbeitrag des Hintergrundes wird. Dieses berechnet sich aus der Photonenstatistik aus der Wurzel der während der Detektionszeit am Pixel empfangenen Photonen.

Für Anwendung bei Tageslicht, wie sie beim Einsatz eines Laserwarners oder einer Mündungsfeuerdetektion auftritt, ist dieser durch das Schrotrauschen erzeugte Rauschanteil der weitaus dominierende Anteil, welcher somit die Nachweisgrenze des Detektors physikalisch begrenzt.

Um nun eine sehr geringe Nachweisgrenze zu erhalten, wird somit der Detektor so gestaltet, dass die Zahl der während des Detektionszeitraums erfassten Photonen des Hintergrundes möglichst gering wird wobei gleichzeitig so viele Photonen des Nutzsignals wie möglich detektiert werden sollen.

Ein erster Schritt hierzu ist die Verwendung eines bildgebenden Detektors mit möglichst vielen Pixeln. Mit zunehmender Pixelanzahl wird das Sichtfeld des einzelnen Pixels immer kleiner, so dass sich die Lichtintensität des Hintergrundlichtes reduziert. Da das zu detektierende Nutzsignal aus ein Punktlichtquelle stammt, bleibt diese jedoch für das getroffene Pixel annähernd gleich, unabhängig von der Pixelanzahl - eine hohe Pixelanzahl reduziert somit bei gleicher Optik das Hintergrundsignal ohne das Nutzsignal zu beeinträchtigen.

Ein zweiter Schritt ist die Reduktion des Detektionszeitraums. Je kürzer der Detektionszeitraum ist, desto weniger Photonen des Hintergrundlichtes werden detektiert. Solange der Detektionszeitraum grösser ist als die Dauer des Nutzsignals wird diese in voller Höhe detektiert. Idealerweise wäre daher der Detektionszeitraum gleich lang wie die Dauer des Nutzsignals. Bei übliche CMOS Kameras liegt die Bildfrequenz bei ca. 50-200 Hz, der Detektionszeitraum ist somit mit 5-20 ms um den Faktor 0,5-2*10⁶ länger als die Dauer eines Laserpulses von z.B. 10 ns. Selbst sehr aufwändige Hochgeschwindigkeitskameras erreichen nur Bildfrequenzen von bis ca. 100kHz, womit der Detektionszeitraum mit 10µs immer noch um den Faktor 1000 länger ist als die Dauer des obigen Laserpulses. Somit sind die bekannten bildgebenden Sensoren, bei welchen jeweils das gesamte Bild nach der Integrationszeit ausgelesen wird, nicht sehr gut zur Detektion kleinster Lichtpulse vor hohem Hintergrundlicht geeignet. Diese Begrenzung wird durch die vorgeschlagene pixelweise Signalverarbeitung aufgehoben. Hier sind in CMOS Technologie Schwellwertkomparatoren bis zu 10 ns Zeitkonstante realisierbar. Die effektive Detektionszeit entspricht dieser Zeitkonstante und kann somit idealerweise gleich lang wie die zu detektierenden Laserpulse realisiert werden.

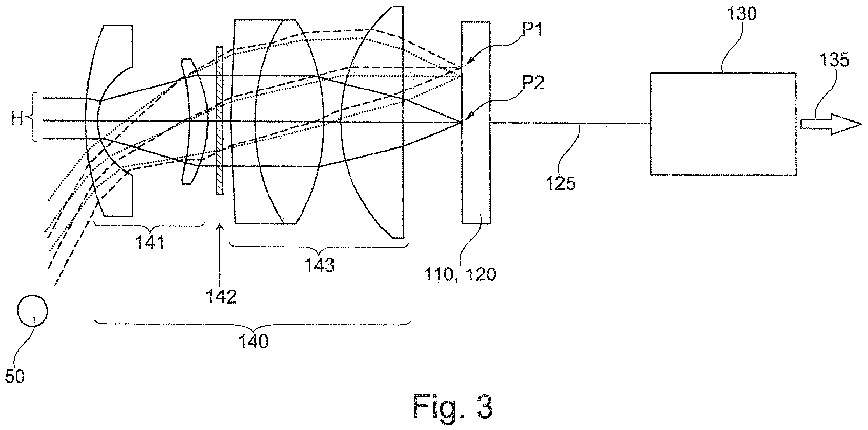

Ein dritter Schritt ist die spektrale Eingrenzung des detektierten Wellenlängenbereiches über einen entsprechenden Interferenzfilter. Solange das Nutzsignal innerhalb des Detektionsbandes liegt wird es hierdurch nicht beeinträchtigt, das Hintergrundsignal nimmt jedoch entsprechend der Bandbreite ab. Diese spektrale Eingrenzung kann jedoch nur insoweit verwendet werden, wie die Wellenlänge des Nutzsignals bekannt ist. Auch wird die minimale Bandbreite durch den gewünschten Blickwinkel der Kamera begrenzt, da Interferenzfilter eine Wellenlängenverschiebung mit dem Einfallwinkel aufweisen. Dieser Einschränkung kann durch die Verwendung spezieller Objektive wie z.B. das in Fig.3 gezeigte reduziert werden.

Um die Anzahl von Falschalarmauslösungen zu begrenzen, kann ein relativ hohe Detektionsschwellenwert von z.B. S/N = 13 genutzt werden (S/N = signal to noise ratio; Signalrauschverhältnis). Ist das Nutzsignal periodisch können auch deutlich kleinere Detektionsschwellenwerte genutzt werden. Diese erzeugen dann zunächst eine relativ hohe Untergrundsignalrate, aus weichen dann z.B. mit einem digitalen Kammfilter das Vorhandensein eines periodischen Signals bei geringer Falschalarmauslösung detektiert werden kann.

Im Folgenden wird ein konkreter Detektor und eine Kamera beschrieben, die dieses Detektorprinzip umsetzt.

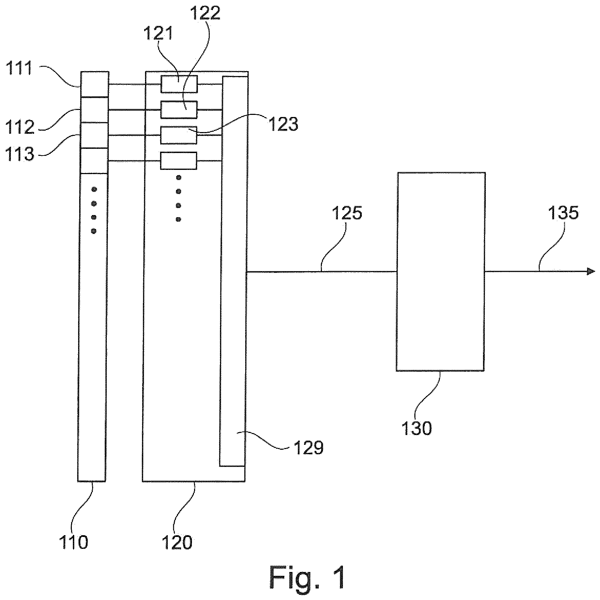

Fig. 1 zeigt ein Ausführungsbeispiel für einen Detektor, der geeignet ist, um ein Detektionssignal einer lokalisierten optischen Quelle (nicht in der Figur 1 gezeigt) vor einem Hintergrund zu detektieren. Der Detektor umfasst einen Bildsensor 110, eine Signalverarbeitungseinheit 120 und eine Warneinheit 130.

Der Bildsensor 110 umfasst eine Vielzahl von Pixeln 111, 112, ... zum optischen Erfassen des Detektionssignals und des Hintergrundes. Der Bildsensor 110 ist ausgebildet, elektrische Bildsignal für jeden einzelnen Pixel 111, 112, ... zu erzeugen und ist als ein Pixelarray von Fotodioden, beispielsweise basierend auf Silizium oder InGaAs (oder anderen III-V Halbleitermaterialien) ausgebildet welcher rückseitig mit der CMOS Signalverarbeitungseinheit 120 verbunden ist. Die Bildsignale sind elektrische Signale, die der einfallenden Lichtintensität entsprechen und von CMOS Signalverarbeitungskomponenten (121,122,123) der Signalverarbeitungseinheit 120 ausgelesen werden. Die Signalverarbeitungseinheit 120 ist ausgebildet, um für jeden Pixel das Bildsignal fortlaufen mit einem Schwellenwert zu vergleichen und bei Überschreiten des Schwellenwertes innerhalb einer Zeitdauer Ereignisdaten 125 auszulösen, die dann über eine Ausgabeeinheit 129 an die Warneinheit 130 ausgegeben werden.

Die Ereignisdaten 125 zeigen ein potenziell zu detektierendes Ereignis an und die Ausgabeeinheit 129 kann zusammen mit diesen Ereignisdaten 125 außerdem Bilddaten (z.B. Intensität) als auch andere Informationen über den betreffenden Pixel (z.B. Zeitpunkt der Schwellwertüberschreitung) ausgeben. Die Warneinheit 130 erzeugt ein Warn- oder Alarmsignal 135, wenn bestimmte Kriterien erfüllt sind. Zu diesen Kriterien können beispielsweise gehören, dass eine bestimmte Mindestanzahl oder Maximalanzahl von Pixeln ein Überschreiten des Schwellenwertes detektiert haben und somit eine lokalisierte optische Quelle detektiert wurde und nicht nur ein zufälliges Rauschen oder ein plötzliches Aufhellen des gesamten Hintergrundes aufgetreten ist.

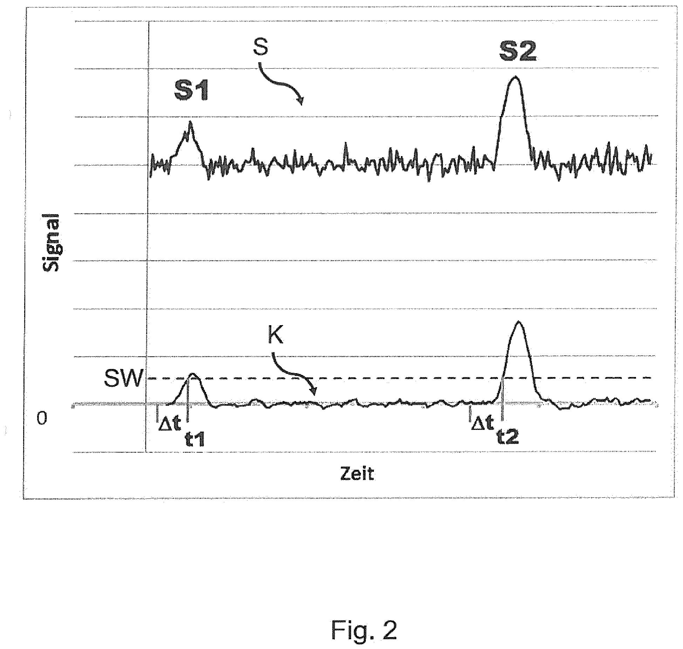

Die Fig. 2 zeigt beispielhaft einen Signalverlauf für ein Bildsignal S, welches für eines der Pixel durch den Bildsensor 110 erfasst wird. Das Bildsignal S kann beispielsweise ein photoelektrischer Strom (von einer Fotodiode) oder eines CCD Pixel in dem Bildsensor 110 darstellen. Der beispielhafte Signalverlauf zeigt den durch das Hintergrundlicht gegebene Untergrundsignal, sowie zwei kurze überlagerte Nutzsignale S1 und S2. Das Signal K ist das resultierende Signal am Schwellwertkomparator mit der Zeitkonstante Δt ohne die mittlere Untergrundintensität (die beispielsweise subtrahiert werden kann). Die gestrichelte Linie zeigt den Schwellenwert. Zu den Zeitpunkten t1 und t2 wird jeweils der Schwellenwertkomparator ausgelöst, da das in dem Intervall Δt vor t1 bzw. t2 liegende aufintegrierte Signal den Schwellenwert überschreitet. Durch den Einsatz einer analogen Signalverarbeitung ist die Detektion nicht an ein Zeitraster gebunden. D. h. die Abstände zwischen t1 und t2 müssen kein ganzzahliges Vielfaches von Δt sein. Jeweils zu den Zeiten t1 und t2 wird das Ereignissignal 125 für das Pixel ausgelöst und an die Warneinheit übermittelt. Optional kann auch noch die Höhe des Signals oder der Zeitpunkt der Auslösung relativ zu einem Referenzzähler ein Bestandteil des Ereignissignals sein.

Wenn dieses Bildsignal nur von einer begrenzten Anzahl von Pixeln erfasst wird, ist davon auszugehen, dass es von einer lokalisierten Quelle stammt und nicht ein zufälliges Rauschsignal und eine plötzliche Aufhellung des Hintergrundes darstellt.

Die Zeitdauer/Integrationszeit Δt ist variabel und kann beispielsweise durch die Signalverarbeitungseinheit 120 oder die Alarmeinheit 130 in Abhängigkeit von bestimmten Kriterien geändert oder eingestellt werden. Dementsprechend wird das Signal S nicht zwingenderweise über einen vorgegebenen konstanten Zeitraum aufsummiert. Der Bereich Δt kann vielmehr flexibel angepasst werden. Zusätzlich zur oder anstatt der Integrationszeit Δt kann ebenfalls der Schwellenwert SW angepasst werden. Der Schwellenwert kann beispielsweise über einen Komparator eingestellt werden, der in jedem Pixel vorhanden sein kann.

Außerdem kann die Warneinheit 130 ein optionales Filter aufweisen, um periodische Signale einer sich sehr schwach wiederholenden Quelle zu finden. Hierfür kann beispielsweise ein digitales Filter genutzt werden. Solche periodischen Quellen sind beispielsweise Lenklaser für lasergesteuerte Lenkflugkörper (Beamrider-Lenkflugkörper). Ein Vorteil dieser Filter besteht darin, dass sehr schwache Signale detektiert werden können. Für diese Anwendung können beispielsweise Schwellenwerte SW1 genutzt werden, die weniger als S/N = 13 aufweisen. Für nicht-periodische Quellen würde die Warneinheit nach Signalpixelintensitäten suchen und dementsprechend einen höheren Schwellenwert SW2 anwenden (z.B. einen Wert S/N = 13 oder auch mehr). Damit wird es möglich bereits für ein einziges Ereignis einen Alarm bei geringer Falschalarmrate zu erzeugen.

Diese Änderungen oder Anpassungen des Schwellenwertes SW (oder SW1 für periodische und SW2 für nicht-periodische Quellen) können ebenfalls dynamisch erfolgen (z.B. während des Betriebes) und können sicherstellen, dass bestimmte Kriterien erfüllt sind. Eines der Kriterien ist beispielsweise die Ereignisrate, d.h. wie viele Ereignisse innerhalb einer vorgegebenen Zeit (z.B. pro Sekunde) detektiert werden. So kann es vorteilhaft sein, wenn diese Rate so hoch gewählt wird (z.B. durch Einstellen des Schwellenwertes), dass die detektierte Ereignisrate durch die nachfolgende Elektronik verarbeitbar ist, aber nicht höher. Wenn der Schwellenwert SW kontinuierlich (dynamisch) angepasst wird, kann eine annähernd konstante Ereignisrate unabhängig von dem tatsächlichen Hintergrundsignal erreicht werden. Durch Einstellen der Integrationszeit Δt kann der Detektor für die erwarteten Nutzsignale optimiert werden indem ein der erwarteten Nutzsignallänge entsprechende Integrationszeit Δt eingestellt wird.

Es ist ebenfalls möglich, die Ereignisrate durch den Schwellenwert SW so zu regeln, dass die Ereignisrate einen Maximalwert nicht überschreitet. Der Maximalwert kann beispielsweise von der Rechenleistung der nachfolgenden Auswerteelektronik abhängen und kann sicherstellen, dass keine Ereignisse ignoriert werden oder erst zu einem Zeitpunkt ausgewertet werden könnten, der für die konkrete Anwendung (als Laserwarner oder als Detektor von feindlichen Feuer) nicht akzeptabel ist.

Bei weiteren Ausführungsbeispielen ist die Detektoreinheit in eine Kamera integriert, die beispielsweise eine große Blende, eine Linse mit spektraler Filterung und einen angepassten CMOS-Sensor-Focal-Plane-Array aufweist. Der anwendbare Wellenlängenbereich für dieses Konzept umfasst insbesondere den UV-Bereich, den sichtbaren Bereich und das nahe Infrarotspektrum (NIR), bis zu einer Wellenlänge von beispielsweise 1064 nm. Der Detektor hat wiederum einen Schwellwertdetektor, der in jedem Pixel integriert ist. Der Schwellwertdetektor löst wieder aus, wenn ein einstellbarer Signalschwellenwert (z.B. SW) erreicht wird, und zwar innerhalb seiner Integrationszeit (Δt). Dieses Ereignis löst ein asynchronisches Auslesen des Pixelwertes aus, wobei gleichzeitig die Pixelkoordinate und die Pixelintensität zusammen mit einem Zeitwert bereitgestellt werden können, um so Zugriff auf das detektierte Ereignis zu erhalten. Das asynchrone Auslesen erfolgt somit ereignisgesteuert und unabhängig vom Auslesen von anderen Pixeln.

In dem in Fig 1 gezeigten Ausführungsbeispiel, bei welchem das Pixelarray rückseitig mit einer CCD Auswerteeinheit verbunden ist, kann durch Verwendung eines Pixelarrays in InGaAs Technologie auch der Wellenlänenbereich bis ca. 1,9 µm abgedeckt werden.

Die Fig. 3 zeigt ein Ausführungsbeispiel gemäß der vorliegenden Erfindung für diesen Detektor/Kamera mit den weiteren optionalen Komponenten.

Das gezeigte Ausführungsbeispiel stellt beispielsweise eine Kamera dar, in der der Bildsensor 110 und die Verarbeitungseinheit 120 eine Einheit bilden, wobei ein optisches Signal von einer lokalisierten optischen Quelle 50 über eine oder mehrere optische Komponenten 140 auf eine erste Position P1 auf einer Sensorfläche (Pixel des Bildsensors 110) projiziert wird. Neben dem optischen Signal wird ebenfalls der Hintergrund H nach dem Durchlaufen der optischen Komponenten 140 auf die Sensorfläche des Bildsensors 110 projiziert. Beispielhaft wird ein Teil des Hintergrundes H auf ein zweite Position P2 der Sensorfläche projiziert. Es versteht sich, dass jede Position P1, P2, ... auf der Sensorfläche eine andere Richtung des Hintergrundes erfasst und dass über eine Kalibrierung festgelegt wird, welche Position auf der Sensorfläche (z.B. welcher Pixel) "wohin schaut". Daher kann aus der Identifikation der Pixel die Richtung der erfassten optischen Quelle bestimmt werden.

Der Bildsensor 110 und die Verarbeitungseinheit 120 erzeugen basierend auf den erfassten optischen Signalen Ereignisdaten 125, die an die Warneinheit 130 weitergeleitet werden. Die Warneinheit 130 umfasst beispielsweise einen Warnprozessor, um ein Warnsignal oder einen Alarm 135 basierend auf den Ereignisdaten und weiteren Kriterien zu erzeugen. Die Ereignisdaten 125 umfassen beispielsweise die Bildwerte, die durch die einzelnen Pixel erfasst wurden und der jeweiligen Intensität der einfallenden optischen Strahlung entsprechen. Optional können ebenfalls die detektierte Zeit und die Position des Pixels als Teil der Ereignisdaten 125 übertragen werden, um basierend darauf wie zuvor beschrieben die Richtung der optischen Quelle zu identifizieren.

Um ein enges spektrales Filtern durchzuführen und so eine gewünschte Sensitivität zu erreichen, kann der Detektor mit einem speziellen Linsendesign ausgerüstet sein. Die optische(n) Komponente(n) 140 umfasst beispielsweise ein Linsensystem eines umgekehrten Galilei Teleskops 141 zur Winkelaufweitung, einen Interferenzfilter 142 und ein primären Objektiv 143. Der Interferenzfilter 142 ist somit an einem Ort geringer Strahldivergenz eingefügt, so dass die Wellenlängenverschiebung der Transmission durch den Einfallwinkel reduziert wird.

Ein geeignetes Linsendesign würde beispielsweise die Verwendung einer 40 nm Filterbreite für eine 900 nm Laserdetektion in einer 90°-FOV-Kamera ermöglichen.

Ausführungsbeispiele ermöglichen insbesondere ein Laserwarnsystem mit nur geringen wiederkehrenden Kosten. Außerdem können unterschiedliche individuelle Linienfiltersensoren für den Laserwarner genutzt werden, um die Sensitivität zu verbessern und um Wellenlängeninformationen mit der Warnung bereitzustellen. Es werden Detektionsempfindlichkeiten erreicht, welche mit bisher bekannten Laserwarnern hoher Ortsauflösung nicht erreichbar sind.

Alle in dieser Anmeldung angegeben Werte sind so zu verstehen, dass Abweichungen innerhalb einer Toleranzbreite auch noch unter die definierten Gegenstände fallen sollen und als offenbart gelten. So kann eine obere Toleranzgrenze um +10% oder +50% oder +100% und die untere Toleranzgrenze um -10% oder -30% oder -50% von dem angegebene Wert abweichen.

### Bezugszeichenliste

- 50: optische Quelle
- 110: Bildsensor
- 111, 112, 113,: Pixel
- 120: Signalverarbeitungseinheit
- 125: Ereignisdaten
- 130: Warneinheit
- 135: Warnsignal
- 140: optische Komponenten
- 141: Galilei-Filter
- 142: Interferenzfilter
- 143: Primärlinsen
- H: Hintergrund
- SW, SW1, SW2: Schwellenwert
- P1, P2: Positionen auf der Sensorfläche

## Patentansprüche

1. Detektoreinheit zum Detektieren eines Detektionssignals von einer lokalisierten optischen Quelle (50) vor einem Hintergrund (H), umfassend:
einen Bildsensor (110) mit einer Vielzahl von Pixeln (111, 112, ...) zum Erfassen des Detektionssignals und des Hintergrundes (H), wobei der Bildsensor (110) ausgebildet ist, um in Abhängigkeit von dem Detektionssignal und dem Hintergrund (H) unabhängig für jedes Pixel (111, 112, ...) ein Bildsignal (S) zu erzeugen;
eine Signalverarbeitungseinheit (120), die ausgebildet ist, um für jedes Pixel (111, 112, ...) das Bildsignal (S) mit einem Schwellenwert (SW) zu vergleichen und, bei Überschreiten des Schwellenwertes (SW) innerhalb einer Zeitdauer (*Δ*t), Ereignisdaten (125) auszugeben, wobei der Schwellenwert (SW) und/oder die Zeitdauer (*Δ*t) pixelabhängig einstellbar sind, **dadurch gekennzeichnet, dass** die Signalverarbeitungseinheit (120) weiter ausgebildet ist, um bei Ausgabe der Ereignisdaten (125) ein Auslesen eines Pixelwertes für das entsprechenden Pixel (111, 112, ...) zu veranlassen, wobei das Auslesen ereignisgesteuert und asynchron erfolgt.

2. Detektoreinheit nach Anspruch 1 , wobei die Signalverarbeitungseinheit (120) in dem Bildsensor (110) integriert ist und der Schwellenwert (SW) für jedes Pixel (111 , 112, ...) individuell einstellbar ist und die Detektionseinheit weiter für jedes Pixel (111 , 112, ...) einen analogen Komparator aufweist, um das Bildsignal (S) mittels des analogen Komparators mit einem für jedes Pixel (111 , 112, .. ,)individuellen Schwellenwert (SW) zu vergleichen, wobei die Zeitdauer (*Δ*t) eine sich aus der Zeitkonstante des analogen Komparators ergebende Integrationszeit zum Aufsummieren des Bildsignals (S) ist.

3. Detektoreinheit nach Anspruch 1 oder Anspruch 2, wobei die Signalverarbeitungseinheit (120) weiter ausgebildet ist, um die Zeitdauer (*Δ*t) und/oder den Schwellenwert (SW) derart anzupassen, dass eine mittlere Anzahl von ausgegebenen Ereignisdaten (125) pro Zeiteinheit innerhalb eines vorbestimmten Bereiches liegt, wobei die Signalverarbeitungseinheit (120) weiter ausgebildet ist, um die Zeitdauer (*Δ*t) und/oder den Schwellenwert (SW) fortlaufend derart anzupassen, dass die mittlere Anzahl von Ereignisdaten pro Zeiteinheit unabhängig von dem Hintergrund (H) ist und dadurch die Detektoreinheit immer mit einer durch die Hintergrundstrahlung begrenzten maximalen Empfindlichkeit zu betreiben.

4. Detektoreinheit nach einem der vorhergehenden Ansprüche, wobei die Signalverarbeitungseinheit (120) weiter ausgebildet ist, um die Schwellenwerte (SW) für jedes Pixel (111, 112, ...) aus einem globalen Schwellenwert abzuleiten und dadurch zu ermöglichen, dass jedes Pixel eine gleiche Lichtempfindlichkeit aufweist und fertigungsbedingte Streuungen von Empfindlichkeiten der Pixel somit kompensiert werden.

5. Detektoreinheit nach einem der vorhergehenden Ansprüche, wobei der Bildsensor (110) einen CMOS-Bildsensor umfasst, wobei die Signalverarbeitungseinheit (120) eine CMOS-Ausleseelektronik umfasst, die rückseitig pixelweise den Bildsensor (110) über pixelspezifische Signalkomponenten (121,122,123,...) kontaktiert, wobei die Pixel (111, 112, ...) des Bildsensors (110) Fotodioden basierend auf Silizium oder InGaAS aufweisen.

6. Detektoreinheit nach einem der vorhergehenden Ansprüche, wobei die Signalverarbeitungseinheit (120) ausgebildet ist, um unabhängig voneinander für jedes Pixel (111, 112, ...) einzeln Ereignisdaten (125) auszugeben.

7. Detektoreinheit nach einem der vorhergehenden Ansprüche, wobei die Signalverarbeitungseinheit (120) weiter ausgebildet ist, um in regelmäßigen Zeitintervallen die für jedes Pixel (111, 112, ...) erhaltenen Ereignisdaten zu zählen und erhaltene Ergebnisse jeweils am Ende eines jeden Zeitintervalls für alle Pixel (111, 112, ...) auszugeben,

8. Detektoreinheit nach einem der vorhergehenden Ansprüche, die weiter eine Warneinheit (130) aufweist, die ausgebildet ist, um basierend auf den Ereignisdaten (125) ein Warnsignal (135) als Warnung vor der lokalisierten optischen Quelle (50) zu erzeugen, wobei die Warneinheit (130) ein Filter aufweist und das Filter ausgebildet ist, um ein periodisches Signal unter Nutzung eines ersten Schwellenwertes (SW1) und ein nichtperiodisches Signal unter Nutzung eines zweiten Schwellenwertes (SW2) zu filtern, wobei der zweite Schwellenwert (SW2) größer ist als der erste Schwellenwert (SW1).

9. Detektoreinheit nach Anspruch 8, wobei die Signalverarbeitungseinheit (120) und/oder die Warneinheit (130) ausgebildet sind, um den Schwellenwert (SW) derart einzustellen, dass ein Signalrauschverhältnis oberhalb von einem Wert 13 liegt.

10. Kamera mit einer Detektoreinheit nach einem der Ansprüche 1 bis 9.

11. Kamera nach Anspruch 10 wobei das Sichtfeld eines Pixels (111, 112, ...) maximal 2° beträgt.

12. Kamera nach Anspruch 10 oder Anspruch 11, die weiter eine Linse, einen Spektralfilter und/oder einen Interferenzfilter aufweist und insbesondere einen Sichtbereich von zumindest 60°*60° erfasst.

13. Warnvorrichtung, insbesondere ein Laserwarner oder ein Detektor für Mündungsfeuer, mit einer Detektoreinheit nach einem der Ansprüche 1 bis 9 oder einer Kamera nach einem der Ansprüche 10 bis 12.

14. Verfahren zum Detektieren eines Detektionssignals von einer lokalisierten optischen Quelle (50) vor einem Hintergrund (H), wobei das Detektionssignals und der Hintergrund (H) durch einen Bildsensor (1 10) mit einer Vielzahl von Pixeln (111, 112, ...) erfasst wird, mit folgenden Schritten:
Erzeugen (S1 10) eines Bildsignals (S), wobei das Bildsignal (S) unabhängig für jeden Pixel (111, 112, ...) erzeugt wird;
Vergleichen (S120) des Bildsignals (S) mit einem Schwellenwert (SW),
Ausgeben (S130) von Ereignisdaten (125), wenn der Schwellenwert (SW) innerhalb einer Zeitdauer (*Δ*t) überschritten wird, wobei das Vergleichen (S120) unabhängig für jedes Pixel (111, 112, ...) einzeln ausgeführt wird und der Schwellenwert (SW) und die Zeitdauer (*Δ*t) einstellbar sind und **dadurch gekennzeichnet, dass** das Ausgeben ein Auslesen eines Pixelwertes für den entsprechenden Pixel (111 , 112,...) umfasst, wobei das Auslesen ereignisgesteuert und asynchron erfolgt.

15. Verfahren nach Anspruch 14, das weiter ein Ändern des Schwellenwertes (SW) und/oder der Zeitdauer (*Δ*t) umfasst, um eine mittlere Rate von ausgegeben Ereignisdaten (125) zu ändern und insbesondere kleiner als einen Maximalwert zu halten.

## Claims

1. Detector unit for detecting a detection signal from a localized optical source (50) against a background (H), comprising:
an image sensor (110) having a plurality of pixels (111, 112, ...) for detecting the detection signal and the background (H), the image sensor (110) being designed to generate an image signal (S) independently for each pixel (111, 112, ...) depending on the detection signal and the background (H);
a signal processing unit (120) which is designed to compare the image signal (S) with a threshold value (SW) for each pixel (111, 112, ...) and, if the threshold value (SW) is exceeded within a period of time (*Δ*t), to output event data (125), the threshold value (SW) and/or the duration (*Δ*t) being adjustable depending on the pixel,
**characterized in that**
the signal processing unit (120) is further designed to read out a pixel value for the corresponding pixels (111, 112, ...) when the event data (125) is output, the read-out being event-controlled and asynchronous.

2. Detector unit according to claim 1, wherein the signal processing unit (120) is integrated in the image sensor (110) and the threshold value (SW) is individually adjustable for each pixel (111, 112, ...) and the detection unit furthermore has an analog comparator for each pixel (111, 112, ...) in order to compare the image signal (S) by means of the analog comparator with an individual threshold value (SW) for each pixel (111, 112, ...), wherein the duration (*Δ*t) is an integration time resulting from the time constant of the analog comparator for adding up the image signal (S).

3. Detector unit according to either claim 1 or claim 2, wherein the signal processing unit (120) is further designed to adapt the duration (*Δ*t) and/or the threshold value (SW) such that an average number of output event data (125) per unit of time is within a predetermined range, wherein the signal processing unit (120) is further designed to continuously adapt the duration (*Δ*t) and/or the threshold value (SW) such that the average number of event data per unit of time is independent of the background (H) and thus to always operate the detector unit with a maximum sensitivity limited by the background radiation.

4. Detector unit according to any of the preceding claims, wherein the signal processing unit (120) is further designed to derive the threshold values (SW) for each pixel (111, 112, ...) from a global threshold value and thus to make it possible for each pixel to have the same light sensitivity and manufacturing-related scatter of sensitivities of the pixels to therefore be compensated for.

5. Detector unit according to any of the preceding claims, wherein the image sensor (110) comprises a CMOS image sensor, wherein the signal processing unit (120) comprises CMOS readout electronics, which contacts, on the rear side, the image sensor (110) pixel by pixel via pixel-specific signal components (121, 122, 123, ...), wherein the pixels (111, 112, ...) of the image sensor (110) have photodiodes based on silicon or InGaAS.

6. Detector unit according to any of the preceding claims, wherein the signal processing unit (120) is designed to output event data (125) individually for each pixel (111, 112, ...) independently of one another.

7. Detector unit according to any of the preceding claims, wherein the signal processing unit (120) is further designed to count the event data obtained for each pixel (111, 112, ...) at regular time intervals and to output the results obtained at the end of each time interval for all pixels (111, 112, ...).

8. Detector unit according to any of the preceding claims, further comprising a warning unit (130) which is designed to generate a warning signal (135) as a warning of the localized optical source (50) based on the event data (125), wherein the warning unit (130) has a filter and the filter is designed to filter a periodic signal using a first threshold value (SW1) and a non-periodic signal using a second threshold value (SW2), wherein the second threshold value (SW2) is greater than the first threshold value (SW1).

9. Detector unit according to claim 8, wherein the signal processing unit (120) and/or the warning unit (130) is designed to set the threshold value (SW) such that a signal-to-noise ratio is above a value of 13.

10. Camera having a detector unit according to any of claims 1 to 9.

11. Camera according to claim 10, wherein the field of view of a pixel (111, 112) is a maximum of 2°.

12. Camera according to either claim 10 or claim 11, which further has a lens, a spectral filter and/or an interference filter and in particular covers a field of view of at least 60°*60°.

13. Warning device, in particular a laser warning device or a detector for muzzle flashes, having a detector unit according to any of claims 1 to 9 or a camera according to any of claims 10 to 12.

14. Method for detecting a detection signal from a localized optical source (50) in front of a background (H), the detection signal and the background (H) being detected by an image sensor (110) having a plurality of pixels (111, 112, ...), comprising the following steps:
generating (S110) an image signal (S), the image signal (S) being generated independently for each pixel (111, 112, ...);
comparing (S120) the image signal (S) with a threshold value (SW),
outputting (S130) event data (125) if the threshold value (SW) is exceeded within a period of time (*Δ*t), the comparison (S120) being carried out independently for each pixel (111, 112, ...) individually and the threshold value (SW) and the duration (*Δ*t) being adjustable and **characterized in that**
the output includes reading out a pixel value for the corresponding pixel (111, 112, ...), the read-out being event-controlled and asynchronous.

15. Method according to claim 14, further comprising changing the threshold value (SW) and/or the duration (*Δ*t) in order to change an average rate of output event data (125) and in particular to keep the rate less than a maximum value.

## Revendications

1. Unité de détection permettant de détecter un signal de détection provenant d'une source optique localisée (50) devant un fond (H), comprenant :
un capteur d'image (110) comportant une pluralité de pixels (111, 112,...) pour détecter le signal de détection et le fond (H), le capteur d'image (110) étant conçu pour générer un signal d'image (S) en fonction du signal de détection et du fond (H) indépendamment pour chaque pixel (111, 112,...) ;
une unité de traitement de signal (120) qui est conçue pour comparer le signal d'image (S) avec une valeur seuil (SW) pour chaque pixel (111, 112,...) et, lorsque la valeur seuil (SW) est dépassée pendant une durée (*Δ*t), pour délivrer en sortie des données d'événement (125), la valeur seuil (SW) et/ou la durée (*Δ*t) pouvant être réglées en fonction du pixel, **caractérisée en ce que** l'unité de traitement de signal (120) est en outre conçue pour provoquer une lecture d'une valeur de pixel pour le pixel correspondant (111, 112,...) lorsqu'elle délivre en sortie les données d'événement (125), la lecture étant commandée par l'événement et asynchrone.

2. Unité de détection selon la revendication 1, l'unité de traitement de signal (120) étant intégrée dans le capteur d'image (110), la valeur seuil (SW) étant réglable individuellement pour chaque pixel (111, 112,...) et l'unité de détection présentant en outre un comparateur analogique pour chaque pixel (111, 112,..,) afin de comparer, au moyen du comparateur analogique, le signal d'image (S) avec une valeur seuil individuelle (SW) pour chaque pixel (111, 112,..,), la durée (*Δ*t) étant un temps d'intégration résultant de la constante de temps du comparateur analogique pour additionner le signal d'image (S).

3. Unité de détection selon la revendication 1 ou la revendication 2, dans laquelle l'unité de traitement de signal (120) est en outre conçue pour ajuster la durée (*Δ*t) et/ou la valeur seuil (SW) de telle sorte qu'un nombre moyen de données d'événement délivrées en sortie (125) par unité de temps se trouve dans une plage prédéterminée, l'unité de traitement de signal (120) étant en outre conçue pour ajuster en continu la durée (*Δ*t) et/ou la valeur seuil (SW) de telle sorte que le nombre moyen de données d'événement par unité de temps est indépendant du fond (H), et qu'ainsi l'unité de détection fonctionne toujours avec une sensibilité maximale limitée par le rayonnement de fond.

4. Unité de détection selon l'une des revendications précédentes, dans laquelle l'unité de traitement de signal (120) est en outre conçue pour dériver les valeurs seuil (SW) pour chaque pixel (111, 112,...) à partir d'une valeur seuil globale et, par conséquent, pour amener chaque pixel à présenter la même sensibilité à la lumière et ainsi compenser des dispersions de sensibilités des pixels qui sont dues à la fabrication.

5. Unité de détection selon l'une des revendications précédentes, dans laquelle le capteur d'image (110) comprend un capteur d'image CMOS, l'unité de traitement de signal (120) comprenant une électronique de lecture CMOS, qui, à l'arrière, pixel par pixel, entre en contact avec le capteur d'image (110) par l'intermédiaire de composantes de signal (121, 122, 123,...) spécifiques aux pixels, les pixels (111, 112,...) du capteur d'image (110) présentant des photodiodes à base de silicium ou d'InGaAS.

6. Unité de détection selon l'une des revendications précédentes, dans laquelle l'unité de traitement de signal (120) est conçue pour délivrer en sortie des données d'événement (125) individuellement indépendamment les unes des autres pour chaque pixel (111, 112,...).

7. Unité de détection selon l'une des revendications précédentes, dans laquelle l'unité de traitement de signal (120) est en outre conçue pour compter les données d'événement obtenues pour chaque pixel (111, 112,...) à intervalles de temps réguliers et pour délivrer en sortie les résultats obtenus respectivement à la fin de chaque intervalle de temps pour tous les pixels (111, 112,...).

8. Unité de détection selon l'une des revendications précédentes, comprenant en outre une unité d'avertissement (130) qui est conçue pour générer un signal d'avertissement (135) en tant qu'avertissement de la source optique localisée (50) sur la base des données d'événement (125), l'unité d'avertissement (130) présentant un filtre et le filtre étant conçu pour filtrer un signal périodique en utilisant une première valeur seuil (SW1) et un signal non périodique en utilisant une seconde valeur seuil (SW2), la seconde valeur seuil (SW2) étant supérieure à la première valeur seuil (SW1).

9. Unité de détection selon la revendication 8, dans laquelle l'unité de traitement de signal (120) et/ou l'unité d'avertissement (130) sont conçues pour régler la valeur seuil (SW) de telle sorte qu'un rapport signal sur bruit est supérieur à une valeur de 13.

10. Caméra comportant une unité de détection selon l'une des revendications 1 à 9.

11. Caméra selon la revendication 10, dans laquelle le champ de vision d'un pixel (111, 112,...) est au maximum de 2°.

12. Caméra selon la revendication 10 ou la revendication 11, laquelle présente en outre une lentille, un filtre spectral et/ou un filtre interférentiel et détecte en particulier une zone de vision d'au moins 60°*60°.

13. Dispositif d'avertissement, en particulier avertisseur laser ou détecteur de lueurs de bouche, comportant une unité de détection selon l'une des revendications 1 à 9 ou une caméra selon l'une des revendications 10 à 12.

14. Procédé permettant de détecter un signal de détection provenant d'une source optique localisée (50) devant un fond (H), le signal de détection et le fond (H) étant détectés par un capteur d'image (110) comportant une pluralité de pixels (111, 112,...), le procédé comportant les étapes suivantes :
génération (S110) d'un signal d'image (S), le signal d'image (S) étant généré indépendamment pour chaque pixel (111, 112,...) ;
comparaison (S120) du signal d'image (S) avec une valeur seuil (SW), sortie (S130) de données d'événement (125) si la valeur seuil (SW) est dépassée pendant une durée (*Δ*t), la comparaison (S120) étant effectuée individuellement indépendamment pour chaque pixel (111, 112,...) et la valeur seuil (SW) et la durée (*Δ*t) étant réglables, **caractérisé en ce que** la sortie comprend la lecture d'une valeur de pixel pour le pixel correspondant (111, 112,...), la lecture étant commandée par événement et asynchrone.

15. Procédé selon la revendication 14, comprenant en outre la modification de la valeur seuil (SW) et/ou de la durée (*Δ*t) afin de modifier un taux moyen de données d'événement délivrées en sortie (125) et en particulier de le maintenir à une valeur inférieure à une valeur maximale.
